# EUROPEAN PATENT APPLICATION

(11) **EP 4 011 554 A1**
(43) Date of publication of application: **15.06.2022**
(21) Application number: 20849293.4
(22) Date of filing: 05.08.2020
(51) Int. Cl.: B24C 11/00, C09K 3/14

(54) **SLURRY USED IN WET BLASTING METHOD**

(30) Priority: 08.08.2019 JP 2019146791
(71) Applicant: Macoho Co., Ltd., Nagaoka-shi, Niigata 940-2032 (JP)
(72) Inventor: MATSUBARA Sachito, Nagaoka-shi, Niigata 940-2032 (JP)
(74) Representative: Viering, Jentschura & Partner mbB Patent- und Rechtsanwälte
(86) International application number: PCT/JP2020/030027
(87) International publication number: WO 2021/025067

(57) **Abstract**

An object of the present invention is to provide a slurry capable of imparting a new effect to a wet blasting treatment method. In a slurry used in a wet blasting method, a liquid and an abrasive as well as a corrosion inhibitor are included.

## Description

### Technical Field

The present invention relates to a slurry used in a wet blasting method.

### Background Art

Conventionally, for example, as described in Patent Literature 1, a liquid and an abrasive are mixed to prepare a slurry and this slurry obtained is injected to a workpiece using compressed air, and thereby a wet blasting method for treating a surface of the workpiece has been performed. This wet blasting (method) is also called wet blasting or liquid honing.

In wet blasting (method), since a liquid carries an abrasive to a surface of a workpiece, the selection range of the size, the shape, even the material, and the like of the abrasive is wider compared to that of dry blasting, therefore even a fine abrasive can be used. In addition, as to the slurry obtained by mixing the liquid and the abrasive, since its fluid control can be performed, the processing treatment with high accuracy can be performed, and since the abrasive after processing is washed away by the liquid, that is, it has a self-cleaning action, the amount of the residue on the surface of the workpiece can also be reduced more compared to that of dry blasting. Moreover, since the pressure upon processing can be suppressed lower than that of dry blasting, the weak workpiece can also be processed without destruction.

### Citation List

### Patent Literature

Patent Literature 1: Japanese Patent Laid-Open No. 2007-038309

### Summary of Invention

### Technical Problem

A main object of the present invention is to provide a slurry capable of imparting a new effect to a wet blasting treatment method having various advantages described above.

### Solution to Problem

The present invention for solving the above problems is a slurry used in a wet blasting method, including a liquid and an abrasive as well as a corrosion inhibitor.

In the present invention, the corrosion inhibitor may be an adsorption film type corrosion inhibitor.

In addition, in the present invention, the content of the corrosion inhibitor may be 1% by mass or less based on the total mass of the slurry.

### Advantageous Effects of Invention

Since a slurry according to the present invention includes a liquid and an abrasive as well as a corrosion inhibitor, it is possible to impart an anti-corrosion effect to a processed surface of a workpiece in addition to an action effect in common wet blasting.

### Brief Description of Drawing

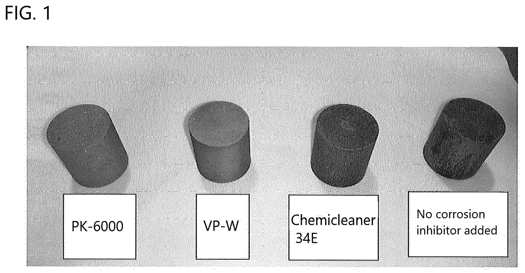

[FIG. 1] FIG. 1 is a photograph showing the result of the surfaces of objects observed after an elapse of 24 hours.

### Description of Embodiments

Hereinafter, a slurry used in a wet blasting method according to embodiments of the present invention (hereinafter, also called simply a "slurry") will be described in detail.

The slurry according to the present embodiment is characterized by including (a) a liquid and (b) an abrasive as well as (c) a corrosion inhibitor. Hereinafter, each component constituting the slurry will specifically be described.

### (a) Liquid

The liquid included in the slurry plays a role of carrying the abrasive described later to the surface of the workpiece. Thus, any liquid can be used except an inflammable substance as long as it can play this role. Specifically, water is preferably used in consideration of environmental aspects and due to the cost.

### (b) Abrasive

The abrasive included in the slurry is carried to the surface of the workpiece by the liquid described above and plays a role of applying desired processing to the surface of the workpiece. Thus, any abrasive can be used as long as it can play this role.

Specific examples of the material of the abrasive include ceramics, resins, and metals and more specific examples thereof include alumina, glass, zirconia, and stainless steel. In addition, examples of the shape of the abrasive include a polygonal shape, a spherical shape, and a true sphere shape. Further, as to the size of the abrasive, the abrasive having a size of about 1 µm to about 300 µm can be appropriately selected and used.

The content of the abrasive in the total slurry is also not particularly limited and can be appropriately designed according to the material and processing area of the workpiece, and even the desired degree of processing, and the like. For example, the content of the abrasive may be 10% by mass or more and 25% by mass or less based on the total mass of the slurry. When the content of the abrasive in the total slurry is over 25% by mass, there is a concern about an increase in consumption due to the collision between the abrasives and in addition, the energy applied to each abrasive is reduced, which is likely to lead to a decrease in processing efficiency. On the other hand, in a case where the content of the abrasive is less than 10% by mass, the absolute amount of the abrasive is insufficient, which is likely to make the processing unstable.

### (c) Corrosion inhibitor

The slurry according to the present embodiment is characterized by including (a) the liquid and (b) the abrasive described above as well as the corrosion inhibitor. The corrosion inhibitor is included in the slurry used in the wet blasting method, which allows conventional wet blasting to be performed on the surface of the workpiece as well as to impart the anti-corrosion effect thereto.

The corrosion inhibitor included in the slurry is not particularly limited and can be appropriately selected and used in consideration of the material of the workpiece, the desired anti-corrosion effect, and the like. Specifically, any of an adsorption film type corrosion inhibitor, an oxide film type (passivation film type) corrosion inhibitor, a precipitation film type corrosion inhibitor, and a deoxidation type corrosion inhibitor can be used.

Examples of the adsorption film type corrosion inhibitor include corrosion inhibitors containing an amine-based organic compound (such as nitrites, carbonates, and carboxylates of amines), octadecialamine, dicyclohexylamine (dicyclohexylammonium nitrite), or the like as a main component.

Examples of the oxide film type corrosion inhibitor include corrosion inhibitors containing nitrites, molybdates, tungstates, chromates, or the like as a main component.

Examples of the precipitation film type corrosion inhibitor include corrosion inhibitors containing phosphates (polyphosphates, phosphonates, and orthophosphates), silicates, metasilicates, benzotriazoles, tolyltriazoles, mercatbenzothiriazoles, or the like as a main component.

Examples of the deoxidation type corrosion inhibitor include corrosion inhibitors containing hydrazine or sulfites as a main component.

The above various corrosion inhibitors can be appropriately selected and used according to the material and the like of the workpiece. For example, in a case where the workpiece is a neodymium alloy, the adsorption film type corrosion inhibitor containing an amine-based organic compound as a main component is preferable.

In wet blasting, after surface peeling (exposure of a new surface) due to the collision between the liquid such as water and the abrasive, and water film coating repeatedly occur on the surface of the workpiece, the water film is removed by air blow or hot air, and thereby the surface becomes dry. However, in a case where the adsorption film type corrosion inhibitor is used, in this process, the corrosion inhibitor included in the water film which has finally covered the surface of the workpiece can be adsorbed on the unoxidized surface in an active state of the workpiece to create a state in which only water is removed. As a result, it can be said that the adsorption film type corrosion inhibitor is a corrosion inhibitor suitable for wet blasting in that an excellent anti-corrosion effect can be exhibited.

The content of the corrosion inhibitor in the total slurry is also not particularly limited, and can be appropriately designed according to the type of the corrosion inhibitor, the material of the workpiece, even the processed area, and the like. Note that, when the content of the corrosion inhibitor in the total slurry is too large, crystals are formed by the corrosion inhibitors and these crystals adsorb moisture, which may cause rust, therefore attention should be paid. For example, in a case where the adsorption film type corrosion inhibitor is used as a corrosion inhibitor, the content thereof may be 1% by mass or less based on the total mass of the slurry. On the other hand, as to the lower limit of the content of the corrosion inhibitor, the corrosion inhibitor may be included therein in such an extent as to exhibit the desired action effect of the corrosion inhibitor and, for example, the lower limit thereof may be 0.3% by mass or more based on the total mass of the slurry.

Note that the type of the corrosion inhibitor included in the slurry according to the present embodiment is not limited to one type, and for example, two or more types selected from the corrosion inhibitors listed above may be included.

### Other component

As to the slurry according to the present embodiment, in addition to each component of (a) to (c) described above, various additives may be added thereto in such an extent as not to inhibit the action effects of each component.

For example, in a case where the surface of the object is contaminated with oil or the like, an appropriate amount of a cleaning agent may be added, and in a case where the there is a possibility of agglutinating the abrasive due to the small size thereof, an appropriate amount of a dispersant may be added. In addition, in a case where oil and the like removed from the surface of the object is mixed into the slurry after using for a certain period of time, there is risk that this oil reattaches to the surface of the object. However, when an appropriate amount of a surfactant is added to the slurry, the reattachment can be effectively suppressed.

### Wet blasting method

The wet blasting method using the slurry according to the present embodiment is not particularly limited. That is, even in the case of using the slurry including the corrosion inhibitor, the same method as the conventional wet blasting method can be performed, and the conventional various wet blasting devices can be used.

### Application for production method for neodymium magnet

The slurry according to the present embodiment can be applied to a production method for a neodymium magnet. An application example will be described below.

For example, a production method for a neodymium magnet comprises the steps of: blending a raw material including neodymium, melting the blended raw material to form an alloy, pulverizing the alloy into a powder, molding the powder into a desired shape in a magnetic field to form a molded body, sintering and heat-treating the molded body to form a sintered body, surface-treating the sintered body, and magnetizing the sintered body after being surface-treated to form a neodymium magnet, wherein a step of applying a wet blasting treatment to the sintered body is performed between "the step of sintering and heat-treating the molded body to form a sintered body" and "the step of surface-treating the sintered body". The slurry according to the present embodiment can be used in "the step of applying a wet blasting treatment to the sintered body". Note that the step of processing the sintered body may be performed between "the step of applying a wet blasting treatment to the sintered body" and "the step of surface-treating the sintered body".

According to such a production method for a neodymium magnet, since "the step of sintering and heat-treating the molded body to form a sintered body" and then "the step of applying a wet blasting treatment to the sintered body" are performed, the scale attached to the surface of the sintered body can be easily removed. Further, by the wet blasting treatment, R-processing can be applied to arbitrary portions such as an end portion and a corner portion of the sintered body, and thereby cracking or chipping of the sintered body can be prevented. Furthermore, since the slurry according to the present embodiment includes the corrosion inhibitor, the anti-corrosion effect can also be imparted to the sintered body after the treatment.

Here, the conditions of the wet blasting treatment in "the step of applying a wet blasting treatment to the sintered body" are not particularly limited. For example, by applying a shot blasting treatment to the sintered body, to which the wet blasting treatment is applied, at an air pressure of 0.1 to 0.4 MPa and a projection distance of 10 to 50 mm while moving the sintered body at a predetermined speed, from one or a plurality of directions thereof, the anti-corrosion effect can be imparted to the sintered body while applying the desired R-processing to each side of the sintered body.

In addition, "the step of surface-treating the sintered body" is a step of surface-treating the sintered body from which the scale has been removed. This step is also not particularly limited, and the surface treatment may be appropriately performed according to the use, shape and the like of a neodymium magnet which is the final product. Examples of the surface treatment include various plating treatments such as a nickel plating treatment and a copper plating treatment. In this case, the thickness of the plating may be about 10 to 20 µm.

### Examples

### (Objects)

As objects, cylinders made of rolled steel material (SS400) were prepared which have a diameter of 20 mm and a length of 20 mm.

### (Slurry of Example 1)

The slurry of Example 1 composed of the following components was prepared.

| | |
|---|---|
| • Corrosion inhibitor: VP-W manufacture by NEOS COMPANY LIMITED | 1% by mass |
| • Abrasive: Alumina SA#60 (average particle diameter 250 µm) | 15% by mass |
| • Water: | 84% by mass |

### (Slurry of Example 2)

The slurry of Example 2 composed of the following components was prepared.

| | |
|---|---|
| • Corrosion inhibitor: PK-6000 manufacture by Nihon Parkerizing Co., Ltd. | 1% by mass |
| • Abrasive: Alumina SA#60 (average particle diameter 250 µm) | 15% by mass |
| • Water: | 84% by mass |

### (Slurry of Example 3)

The slurry of Example 3 composed of the following components was prepared.

| | |
|---|---|
| • Corrosion inhibitor: | Chemicleaner 34E manufacture by |
| Japan Cee-Bee Chemical Co., Ltd. | 1% by mass |
| • Abrasive: Alumina SA#60 (average particle diameter 250 µm) | 15% by mass |
| • Water: | 84% by mass |

### (Slurry of Comparative Example 1)

The slurry of Comparative Example 1 composed of the following components was prepared.

| | |
|---|---|
| • Abrasive: Alumina SA#60 (average particle diameter 250 µm) | 15% by mass |
| • Water: | 85% by mass |

### (Shot blasting)

Shot blasting was applied to the above objects using the slurries of Examples 1 to 3 and Comparative Example 1 described above under the following conditions.
- Device: manual wet blast machine, COCOTTE (Registered trademark) manufactured by MACOHO Co., Ltd.
- Air pressure: 0.2 MPa
- Treatment time: 30 seconds

### (Evaluation of anti-corrosion effect)

The objects subjected to shot blasting were lightly washed with water and allowed to stand in a state where water remained on its surface, and the result of the surfaces of the objects observed after an elapse of 24 hours is shown in FIG. 1.

As shown in FIG. 1, the generation of rust of the objects, to which shot blasting was applied using the slurries of Examples 1 to 3 including the corrosion inhibitor, was more suppressed, compared to that of the object to which shot blasting was applied using the slurry of Comparative Example 1 including no corrosion inhibitor. Particularly, the slurries of Examples 1 and 2 including the adsorption film type corrosion inhibitor were excellent in the anti-corrosion effect.

## Claims

1. A slurry used in a wet blasting method, comprising a liquid and an abrasive as well as a corrosion inhibitor.

2. The slurry according to claim 1, wherein the corrosion inhibitor is an adsorption film type corrosion inhibitor.

3. The slurry according to claim 2, wherein a content of the corrosion inhibitor is 1% by mass or less based on the total mass of the slurry.
